# EUROPÄISCHE PATENTSCHRIFT

(11) **EP 1 800 783 B1**
(45) Veröffentlichungstag und Bekanntmachung des Hinweises auf die Patenterteilung: **28.08.2013**
(21) Anmeldenummer: 06025919.9
(22) Anmeldetag: 14.12.2006
(51) Int. Cl.: B23D 47/04

(54) **Zuschneidetisch und Verfahren zum Schneiden von Profilabschnitten**
Cutting table and method for cutting profile sections
Table de coupe et procédé de coupe de sections de profilés

(30) Priorität: 24.12.2005 DE 102005062305
(43) Veröffentlichungstag der Anmeldung: 27.06.2007
(73) Patentinhaber: Maschinen Witte GmbH + Co.KG, 49176 Hilter (DE)
(72) Erfinder: Witte, Heinz-Dieter, 49176 Hilter a.T.W. (DE); Holzlöhner, Uwe, 49201 Dissen (DE)
(74) Vertreter: Busse & Busse

(56) Entgegenhaltungen:
- WO-A-03/101687
- DE-A1- 19 604 021
- DE-U1- 8 624 332
- DE-U1- 29 622 527
- FR-A1- 2 512 894
- US-A- 1 548 950
- US-A- 3 578 043

## Beschreibung

Die Erfindung betrifft einen Zuschneidetisch für Profilabschnitte nach dem Oberbegriff des Anspruchs 1 sowie ein Verfahren zum Schneiden von Profilabschnitten nach dem Oberbegriff des Anspruch 9. Eine solche Vorrichtung und ein zugehöriges Verfahren sind aus FR 25 12894 A1 bekannt.

Bei Profilabschnitten, die unter einem Winkel flächengenau und stufenlos aneinanderzusetzen sind, werden Gehrungsschnitte vorgesehen, bei denen beide zusammenzustoßenden Enden der Profilabschnitte unter einem (gegensinnig) gleichen Winkel angeschnitten sind. Die Festlegung unter Führung des Schnittwinkels ist allerdings insbesondere dann nicht einheitlich und einfach, wenn etwa unterschiedliche Winkel oder gar bogenförmige Profilabschnitte einzubeziehen sind. Über die Menge in der Außenkontur genau auf Gehrung zusammengestoßener Profilabschnitte hinaus kommt es bei Kunststoff-Profilabschnitten für Tür- oder Fensterrahmen mit Innenstegen auch darauf an, daß diese Innen-Stege endseitig zu einem Verschweißen aufeinadnertreffen.

Bei herkömmlichen Anreiß- oder Zuschneidetischen finden dazu Schablonen Verwendung, die von einem Aufreißen oder Aufzeichnen der Profilabschnitte her eine Vorlage und eine Anschlaghilfe beim Schneiden ergeben können, die aber beim Ausrichten der Profilabschnitte und der Zuschneideeinrichtung die Gefahr von Fehlern und Ungenauigkeiten mit sich bringen und überdies viel an Vorbereitungs- und Richtzeit bedingen.

Aufgabe der Erfindung ist es, einen Zuschneidetisch für Profilabschnitte und ein Verfahren zum Schneiden von Profilabschnitten zu schaffen, mit dem ein einfacheres, verläßlicheres und genaueres Zuschneiden der Profilabschnitte ermöglicht wird und insbesondere auch Kunststoff-Profilabschnitte für Tür- und Fensterrahmen einschließlich solcher mit vielkammeriger Unterteilung durch Zwischenstege, zu einem Verschweißen an den Stoßflächen präzisen Endquerschnitt zu bringen sind.

Diese Aufgabe wird gemäß der Erfindung mit einem Zuschneidetisch nach dem Anspruch 1 sowie mit einem Verfahren zum Schneiden von Profilabschnitten nach dem Anspruch 9 gelöst.

Der Zuschneidetisch gemäß Anspruch 1 sieht eine erste Halteeinrichtung für einen ersten Profilabschnitt und eine zweite Halteeinrichtung für einen zweiten Profilabschnitt vor, mit denen die beiden zueinander auszurichtenden und präzise mit einem Gehrungsschnitt auf beiden Seiten zu versehenden Profilabschnitt in der Soll-Lage wiedergegeben sind. Dabei wird der zweite Profilabschnitt, der ggf. gebogen sein kann, auf dem Zuschneidetisch festgelegt, während der erste Profilabschnitt, der ein gerader Profilabschnitt sein soll, gleichfalls in seiner Soll-Lage, allerdings längsverschoben gehalten wird, um dem zweiten Profilabschnitt nicht in die Quere zu kommen. Der erste Profilabschnitt kann auch einstweilen durch eine ersatzweise vorgehaltene Lehre, Schablone o. dgl. gleicher Breite ersetzt sein oder sogar durch eine Leereinstellung der Halteeinrichtung simuliert werden, da es für das Anreißen nur darauf ankommt, die Flucht der Seitenlinien des geraden ersten Profilabschnitts über den Endbereich des zweiten Profilabschnitts hinaus zu erhalten.

Eine Anreißhilfe für den fluchtenden Seitenverlauf des ersten Profilabschnitts bis zum zweiten Profilabschnitt kann also in einer entsprechenden Lehre oder einer Schablone bestehen, die mit Hilfe der ersten Halteeinrichtung festgelegt und ausgerichtet ist und den Seitenverlauf damit auf dem zweiten Profilabschnitt anzuzeichnen bzw. anzureißen erlaubt. Eine Anreißhilfe kann aber auch beispielsweise in Lichtzeigern, insbesondere Laserlichtzeigern, bestehen, die mit der ersten Halteeinrichtung verbunden sind und etwa bei einer Halteeinrichtung mit seitlichen Spannbacken den fluchtenden Verlauf der Spannbackenflächen zum zweiten Profilabschnitt hin markieren, so daß sich auf dem zweiten Profilabschnitt die Überschneidungskonturen des ersten Profilabschnitts abzeichnen.

Mit verschiedenen möglichen Formen einer solchen Anreißhilfe ergibt sich auf dem zweiten Profilabschnitt in der Draufsicht ein Geviert aus dem fluchtenden Seitenverlauf des ersten Profilabschnitts und aus dem gegebenen Seitenverlauf des zweiten Profilabschnitts, wobei eine der Diagonalen des Gevierts die Linie für den Gehrungsschnitt vorgibt.

Auf diese Diagonale für den Gehrungsschnitt wird die winkelverstellbare Schneideinrichtung mit einer weiteren Anreißhilfe eingestellt, die eine Anreißlinie innerhalb der Schnittebene wiedergibt. Diese Anreißhilfe für den Schnittverlauf ist mit der Schneideinrichtung winkelgenau und deckungsgleich verbunden und sorgt dafür, daß der danach erfolgende Schnitt der gewünschte Gehrungsschnitt ist. Dieser Schnitt erfolgt zunächst am zweiten Profilabschnitt.

Sobald der zweite Profilabschnitt entfernt oder abgerückt ist, kann der erste Profilabschnitt bis zur Schneideinrichtung vorgeschoben oder überhaupt erst in die Halteeinrichtung eingesetzt werden, wobei er dann mit der gleichen Schneideinstellung geschnitten wird.

Die Handhabung des Zuschneidetisches ist überaus präzise, zumal sie Übertragungs- und Anlagefehler wie bei dem Arbeiten mit Schablonen ausschließt. Überdies ist sie auch anschaulich und eingängig, da die Teile bzw. die Einstellungen zueinander in der Lage bereits die für die zusammenzusetzenden Profilabschnitte entstehenden Winkel erkennen lassen.

Für das Verfahren nach dem Anspruch 9 gelten die entsprechenden Vorteile.

Ein Ausführungsbeispiel der Erfindung ist in der Zeichnung dargestellt und wird nachfolgend näher beschrieben. In der Zeichnung zeigen:
- Fig. 1: eine Draufsicht auf einen Zuschneidetisch nach der Erfindung,
- Fig. 2: eine Draufsicht auf den Zuschneidetisch nach Fig. 1 mit darauf gehaltenen und ausgerichteten Profilabschnitten und
- Fig. 3: Draufsicht auf den Zuschneidetisch nach Fig. 1 und 2 mit Einstellung der Schneideinrichtung auf einen Gehrungsschnitt (auf einer Seite).

In der Zeichnung ist ein Zuschneidetisch als Ganzer mit 1 bezeichnet, der in besonderer Weise dafür vorgesehen ist, Kunststoffprofilabschnitte in einfacher Weise maßgenau auf Gehrung zu schneiden, wenn diese zu einem Tür- oder Fensterrahmen, insbesondere als Flügelrahmen für einen Fensterflügel, zusammengeschweißt oder auf andere Weise zusammengefügt werden sollen, wobei es bei modernen, in eine Vielzahl von Kammern mit oft dünnen Trenn und Zwischenstegen nicht nur auf einen außenseitig bündigen Abschluß der Profile im Stoßbereich ankommt, sondern auch ggf. auf eine sauberes Zusammentreffen der innenliegenden Stege. Dabei ist üblicherweise von geraden Profilabschnitten auszugehen, die beim Tür- oder Fensterrahmen parallele seitliche Holme bilden, die aber miteinander durch einen weiteren Profilabschnitt als Joch zu verbinden sind, der je nach vorgegebener Gestaltung gerade, kreisbogenförmig, stichbogenförmig oder auch korbbogenförmig sein kann, wodurch sich das Zuschneiden schwieriger gestaltet und bisher oft aufwendige Vorarbeiten mit der Erstellung von geeigneten Schablonen voraussetzt.

Der hier betrachtete Zuschneidetisch 1 bildet eine unterteilte aber insgesamt in einer planen Ebene liegende Arbeitsoberfläche mit zwei Trägerplatten 2,3, in die jeweils eine winkelverstellbare Schneideinrichtung 4 bzw. 5 eingelassen ist, deren mit der Trägerplatte bündige Oberfläche einen Durchtrittsschlitz 6 bzw. 7 aufweist, durch den hindurch von unten eine Schneideinrichtung in Form einer Kreissäge hochfahrbar ist, um einen Schnitt längs des Schlitzes auszuführen bzw. (wieder) in eine abgesenkte Stellung mit Berührungsschutz und Freiraum auf der Ebene der Trägerplatten herunterzufahren.

Die Trägerplatte 2 weist eine erste Halteeinrichtung für einen ersten Profilabschnitt mit einem zweigeteilten feststehenden Anschlag 10,11 und einem durch ein druckmittelbetätigtes Stellglied 12 vorbeweglichen zweiten Anschlag 13 auf. Zwischen beiden ist ein erster (gerader) Profilabschnitt feststellbar, wobei die dem beweglichen Anschlag 13 zugewandten Anschlagflächen des Anschlags 10,11 eine fluchtende Linie bilden, die in der Draufsicht durch den Drehmittelpunkt der Schneideinrichtung 4 hindurchläuft.

Die Trägerplatte 3 ist ganz entsprechend mit einer weiteren ersten Halteeinrichtung für einen geraden Profilabschnitt mit einem feststehenden Anschlag 14,15 und einem beweglichen Anschlag 16 ausgestattet, der auch seinerseits durch ein druckmittelbetätigtes, vorzugsweise pneumatisches Stellglied 17 zustellbar ist. Auch dort sind die Anschlagflächen des feststehenden Anschlags 14,15, die dem beweglichen Anschlag 16 zugewandt sind, auf einer durch den Drehmittelpunkt der Schneideinrichtung 5 hindurchlaufenden Linie angeordnet. In beiden Fällen sind die zweiteiligen feststehenden Anschläge in einem mittleren Bereich der Schneideinrichtung 4 bzw. 5 unterbrochen und voneinander abgerückt, um dort eine Durchtrittsmöglichkeit für zu schneidende Profile zu eröffnen.

Zwischen den beiden Trägerplatten 2 und 3 ist auf den Schienen 8,9 eine zweite Halteeinrichtung 18 mit einem feststehenden Anschlag 19 und einem durch ein druckmittelbetätigtes Stellglied beweglichen Anschlag 20 über eine Führungsschiene 21 gelagert, die mit den Schienen 8,9 fest verbunden ist. Die zweite Halteeinrichtung 18 kann auf dieser Führungsschiene verschoben werden, wobei eine Einstellskala 22 auf der Führungsschiene 21 sowohl das Einstellen um ein vorgegebenes Maß wie auch das Wiederauffinden einer Einstellung erleichtert.

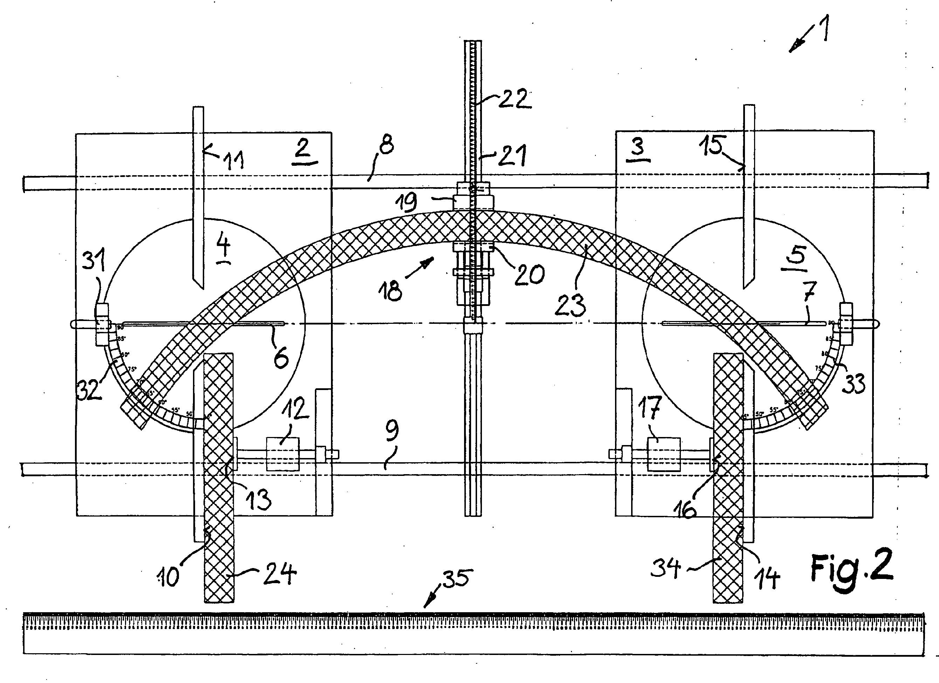

Wie Fig. 2 veranschaulicht, ist die Halteeinrichtung 18 zur Festlegung eines (zweiten) Profilabschnitts vorgesehen, der nicht gerade sein muß, sondern beispielsweise bogenförmig geformt sein kann. Derartige bogenförmige Profilabschnitte sind mit bekannten Umformtechniken aus geraden Standard-Profilelementen mit Hilfe von Schablonen im erweichten Zustand zu gewinnen.

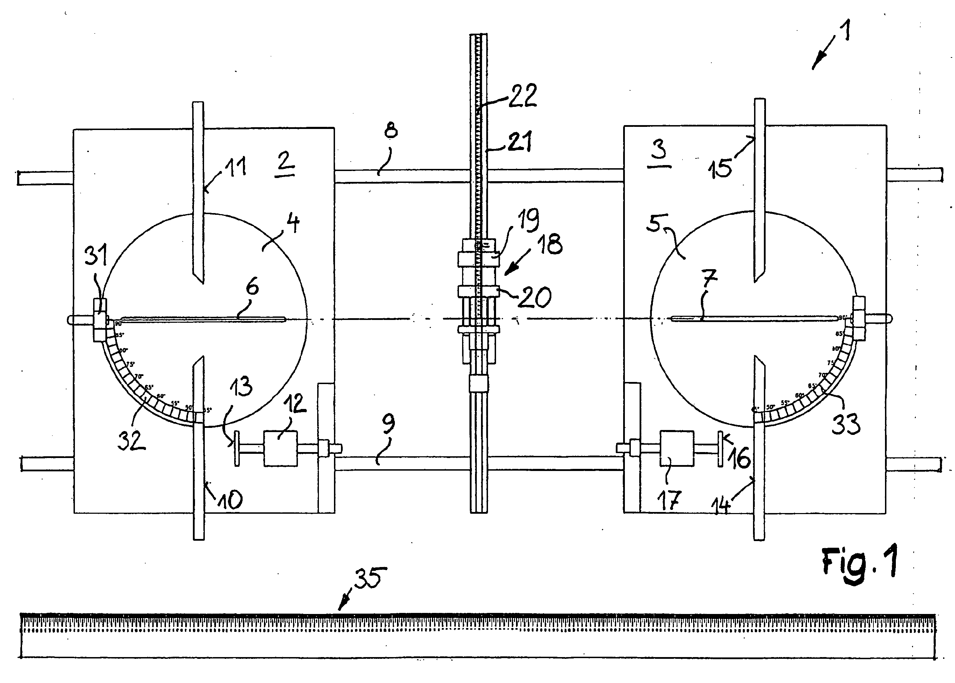

In Fig. 2 ist ein (zweiter, bogenförmiger) Profilabschnitt 23 in der Halteeinrichtung 18 festgelegt, die gegenüber der Situation nach Fig. 1 um ein vorgegebenes Stichmaß des Bogens längs der Führungsschiene 21 bewegt worden ist, so daß der Bogen durch den Bereich der Schneideinrichtung 4 und 5, und zwar durch die von den Anschlägen 10,11 bzw. 14,15 im mittleren Bereich der Schneideinrichtungen 4 bzw. 5 freibelassenen Lücken verläuft.

In die erste Halteeinrichtung 10,11,13 ist ein erster Profilabschnitt 24 eingespannt, der zunächst nur dazu dient, die Halteeinrichtung auf die passende Profilbreite zwischen dem Anschlag 10 und dem Anschlag 13 festzulegen. Dies reicht aus, mit Hilfe einer geeigneten Anreißeinrichtung einen (fluchtenden) Überschneidungsbereich der beiden Profile erkennbar zu machen und die Schneideinrichtung mit dem Schnittwinkel auf den gewünschten Gehrungsschnitt einstellen zu können.

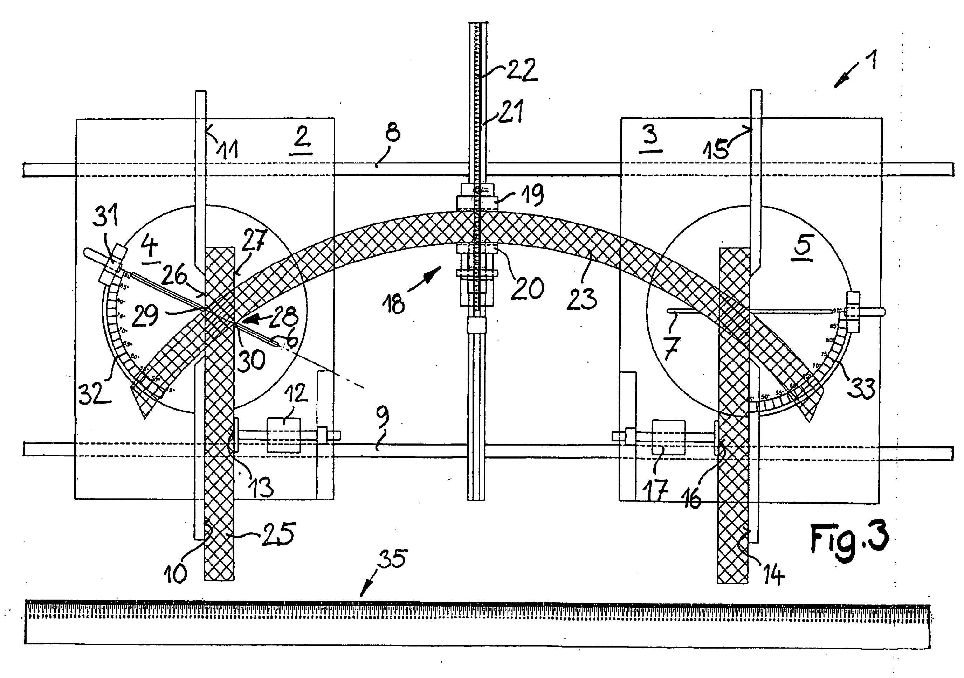

In Fig. 3 ist im Sinne einer besonders einfachen Anreißeinrichtung eine Schablone 25 gezeigt, die mit gleicher Breite wie der erste Profilabschnitt auf letzteren und auf den zweiten Profilabschnitt 23 auflegbar ist, um auf den zweiten Profilabschnitt Fluchtlinien 26,27 des ersten Profilabschnitts anzureißen. Eine solche Schablone 25 ist durchaus praktikabel, wenngleich es sich versteht, daß mit der ersten Halteeinrichtung auch zwei längs- oder hochbewegliche Lineale zu den seitlichen Anschlagflächen verbunden sein können, die ein Anreißen der Fluchtlinien der Anschlagflächen der ersten Halteeinrichtung 10,13 auf dem zweiten Profilabschnitt ermöglichen. Ebenso können Lichtzeiger an den Anschlagflächen der ersten Halteeinrichtung 10,13 vorgesehen werden, die die Fluchtlinien auf den zweiten Profilabschnitt 23 körperlos abzeichnen, wobei insbesondere die Verwendung von Laserlichtelementen in Betracht kommt.

Wie aus Fig. 3 ersichtlich, ergibt sich ein viereckiger, etwa rautenförmiger Überschneidungsbereich bzw. Durchdringungsbereich der Profilabschnitte 23,24 mit zwei einander gegenüberliegenden Eckpunkten 29,30, durch die hindurch der passende Gehrungsschnitt zu legen ist.

Die Schneideinrichtung 4 wird entsprechend mit einer Winkelverstellung ausgerichtet, wobei eine zweite Anreißhilfe 31 in Form einer Laserlichtquelle für einen Lichtzeiger einen feinen, bequem und präzise ausrichtbaren Lichtstrahl in der Schnittebene liefert, in der ein anschließend von unten hochfahrbares Kreissägeblatt der Schneideinrichtung den Schnitt ausführt. Es versteht sich, daß eine Schablone 25, wie hier dargestellt, nach der Schnitteinstellung und vor der Schnittausführung zu entfernen ist. Der Schnitt geht nur durch den Profilabschnitt 23.

Auf der anderen Seite des Profilabschnitts 23 kann in gleicher Weise verfahren, d.h. angerissen, eingestellt und geschnitten werden. Bei symmetrischen bzw. gleichförmigen Bogen wie hier anhand des Profilabschnitts 23 dargestellt und wie es in der Praxis regelmäßig zu finden ist, kann allerdings auch die Winkeleinstellung der einen Seite auf die anderen Seite ohne eigenständiges Anreißen übertragen werden. Bei der Übertragung von Hand kann eine Winkelskala 32 bzw. 33 an den Schneideinrichtungen 4 bzw. 5 benutzt werden. In gleicher Weise ist aber für eine solche Übertragung eine präzise mechanische Kopplung der Winkelverstellung beider Schneideinrichtungen 4,5 in jeweils gleicher Größe aber im gegenläufigen Drehsinn möglich.

Der Profilabschnitt 23 wird nachfolgend aus der Halterung entnommen oder mit dieser aus dem Arbeitsbereich der Schneideinrichtungen 4,5 herausbewegt, um Platz für den entsprechenden Gehrungsschnitt an dem ersten Profilabschnitt 24 und einem dazu parallel vorgesehenen Profilabschnitt 34 zu schaffen, die in die entsprechenden Halterungen eingelegt bzw. in diesen verschoben werden, so daß sie zumindest mit ihren Endbereichen die Schnittlinien der Schneideinrichtungen 4,5 überqueren. Vorzugsweise wird damit der jeweilige Profilabschnitt 24 bzw. 34 gleichauf eine vorgegebene Länge geschnitten.

Der Zuschnitt der Profilabschnitte ist dann, von einer vorbestimmten Zugabe für ein Abschmelzen oder Abbrennen beim Schweißen an den Gehrungsschnittflächen abgesehen, dem aus den Profilabschnitten herzustellenden Rahmen ganz entsprechend. In dieser Hinsicht wird nicht nur das Stichmaß bei bogenförmigen Profilabschnitten in vorgegebener Weise eingestellt, sondern auch der Abstand der geraden Profilabschnitte 24 und 34 anhand des Abstandes der Trägerplatten 2 und 3 voneinander, der anhand einer Skala 35 eingestellt und überprüft werden kann, die von einem Nullpunkt in Ausrichtung auf die Führungsschiene 21 ausgehend zu beiden Seiten hin verläuft. Mit dieser Gestaltung wird der Zuschnitt von Profilabschnitten beschleunigt und vereinfacht und auch hinsichtlich der Übersichtlichkeit des Vorgehens verbessert, um Meß- und Übertragungsfehler auszuschalten.

## Patentansprüche

1. Zuschneidetisch (1) für Profilabschnitte (23, 24, 34), insbesondere Kunststoff-Profilabschnitte für Tür- oder Fensterrahmen, die in einer vorgegebenen Winkelstellung mit Gehrungsschnitten querschnittsgenau aneinanderzusetzen sind, wobei eine erste Hafteeinrichtung (10, 11, 13) auf dem Zuschneidetisch (1) für einen ersten geraden Profilabschnitt (24, 34) und zumindest eine zweite Halteeinrichtung (18) für einen in der vorgegebenen Winkelstellung zum ersten Profilabschnitt (24, 34) festzulegenden zweiten Profilabschnitt (23) auf dem Zuschneidetisch (1) mit Ausrichtung auf eine winkelverstellbare Schneideinrichtung (4, 5) vorgesehen ist, **dadurch gekennzeichnet, dass** die erste und die zweite Halteeinrichtung (10, 11, 13; 18) den ersten geraden Profilabschnitt (24, 34) und den zweiten Profilabschnitt (23) in ihrer Soll-Lage auf dem Zuschneidetisch festlegen, wobei der erste gerade Profilabschnift (24, 34) allerdings längsverschoben gehalten wird, dass zumindest eine erste Anreißhilfe (25) an der ersten Halteeinrichtung (10,11,13) für deren fluchtenden Seitenverlauf bis zum zweiten Profilabschnitt (23) vorgesehen ist und dass eine zweite Anreißhilfe (31) für den Schnittverlauf mit der Schneideinrichtung (4, 5) verbunden ist.

2. Zuschneidetisch (1) nach Anspruch 1, **dadurch gekennzeichnet, daß** die zweite Halteeinrichtung (18) parallel zur Ausrichtung der ersten Halteeinrichtung (10,11,13) verstellbar ausgerichtet ist.

3. Zuschneidetisch nach Anspruch 2, **dadurch gekennzeichnet, daß** die zweite Halteeinrichtung (18) quer zur Ausrichtung der ersten Halteeinrichtung ausgerichtet ist.

4. Zuschneidetisch nach Anspruch 1, 2 oder 3, **dadurch gekennzeichnet, daß** die zweite Halteeinrichtung (18) und die erste Halteeinrichtung (10,11,13) in ihrem Abstand quer zur Ausrichtung der ersten Halteeinrichtung (10,11,12) verstellbar (Schienen 8,9) ausgebildet sind.

5. Zuschneidetisch nach einem der Ansprüche 1 bis 4, **dadurch gekennzeichnet, daß** die erste Halteeinrichtung (10,11,13) einseitig einen feststehenden Anschlag (10,11) aufweist, der auf einen festen Drehpunkt der winkelverstellbaren Schneideinrichtung (4) ausgerichtet ist.

6. Zuschneidetisch nach einem der Ansprüche 1 bis 5, **dadurch gekennzeichnet, daß** die Anreißhilfen (25,31) zumindest zum Teil von Lichtzeiger (31) gebildet sind.

7. Zuschneidetisch nach einem der Ansprüche 1 bis 6, **dadurch gekennzeichnet, daß** die erste Anreißhilfe (25) in einer in die erste Halteeinrichtung (10,11,13) einzusetzenden Anreißschablone besteht, die eine mit dem ersten Profilabschnitt (24) überreinstimmende Breite aufweist.

8. Zuschneidetisch nach einem der Ansprüche 1 bis 7, **dadurch gekennzeichnet, daß** beidseitig zu der zweiten Halteeinrichtung (18) zwei zueinander parallele erste Haltereinrichtungen (10,11,13/14,15,16) mit Ausrichtung auf jeweils eine von zwei Schneideinrichtungen (4,5) vorgesehen sind, die einander gegenüber abstandsverstellbar sind.

9. Verfahren zum Schneiden von Profilabschnitten insbesondere von Kunststoff-Profilabschnitten für Tür- oder Fensterrahmen auf Gehrung, wobei ein erster, gerader Profilabschnitt (24) auf einem Zuschneidetisch (1) in einer vorgegebenen , auf eine winkelverstellbare Schneideinrichtung (4) hin verlaufende Richtung in einer ersten Halteeinrichtung (10, 11, 13) und ein zweiter Profilstrangabschnitt (23) winkelgerecht zum ersten Profilstrangabschnitt (24) in den Bereich der Schneideinrichtung (4) in einer zweiten Halteeinrichtung (18) festgelegt werden, **dadurch gekennzeichnet, dass** der erste und zweite Profilabschnitt (24, 34; 23) in ihrer Soll-Lage, allerdings bei längsverschobenem ersten Profilabschnitt (24, 34), auf dem Zuschneidetisch (1) festgelegt sind, dass die Seitenfluchtlinien des ersten Profilstangabschnitts (24) auf dem zweiten Profilabschnitt (23) angerissen werden, dass die Schneideeinrichtung (4) zu einem Gehrungsschnitt auf den Anriss am zweiten Strangabschnitt (23) ausgerichtet und betätigt wird und dass der erste Profilstrangabschnitt (24, 34) in der Halteeinrichtung (10, 11, 13) bis zur Schneideinrichtung (4) längsverschoben und mit der gleichen Winkelstellung der Schneideinrichtung (4) wie der zweite Profilstrangabschnitt (23) geschnitten wird.

10. Verfahren nach Anspruch 9 mit einem mit zwei parallelen zueinander abstandsveränderlich ausgebildeten ersten Halteeinrichtungen (10,11,13/14,15,16), die jeweils auf eine von zwei winkelverstellbaren Schneideinrichtungen (4,5) ausgerichtet sind, **dadurch gekennzeichnet, daß** die beiden Halteeinrichtungen (10,11,13/14,15,16) in ihrem Abstand zueinander auf eine vorgegebene Breite eines Tür- oder Fensterrahmens eingestellt werden, daß der zweite Profilabschnitt (23) dazu in seiner für einen Tür- oder Fensterrahmen vorgegebenen Lage festgelegt wird, daß die Seitenlinien des zweiten und zumindest eines ersten Profilabschnitts angerissen werden und daß danach die Schneideinrichtung (4) im Winkel eingestellt und betätigt wird.

11. Verfahren nach Anspruch 10 zum Schneiden von Profilabschnitten für spiegelsymmetrisch ausgebildete Tür- oder Fensterrahmen, **dadurch gekennzeichnet, daß** das Anreißen der Seitenlinien nur mit einem ersten Profilabschnitt (24) durchgeführt wird und daß die Winkeleinstellung der zweiten Schneideinrichtung (5) gegensinnig gleich zur Winkeleinstellung der ersten Schneideinrichtung (4) vorgenommen wird.

## Claims

1. A cutting bench (1) for profile sections (23, 24, 34), particularly plastic profile sections for door or window frames that must be assembled at a preset angular position with miter cuts, with cross-sectional precision, wherein a first holding means (10,11,13) is provided on the cutting bench (1) for a first straight profile section (24, 34) and at least one second holding means (18) for a second profile section (23) that must be defined on the cutting bench (1) in a preset angular position relative to the first profile section (24, 34), aligned relative to an angularly adjustable cutting means (4, 5), **characterized in that** the first and the second holding means (10,11,13, 18) define the first straight profile section (24, 34) and the second profile section (23) in the desired positions thereof on the cutting bench, wherein the first straight profile section (24, 34), however, is held longitudinally displaced such that at least one first marking aid (25) is provided on the first holding means (10,11, 13) for the vanishing lateral extension to the second profile section (23), and **in that** a second marking aid (31) is connected to the cutting means (4, 5)for the course of the cut.

2. The cutting bench (1) according to Claim 1, **characterized in that** the second holding means (18) is adjustably aligned parallel relative to the alignment of the first holding means (10,11,13).

3. The cutting bench (1) according to Claim 1, **characterized in that** the second holding means (18) is aligned diagonally relative to the alignment of the first holding means.

4. The cutting bench (1) according to Claims 1, 2 or 3, **characterized in that** the second holding means (18) and the first holding means (10,11,13) are adjustably configured (tracks 8, 9) in terms of their distance, diagonally relative to the alignment of the first holding means (10,11,12) (rails 8,9).

5. The cutting bench (1) according to any one of the Claims 1 to 4, **characterized in that** the first holding means (10,11,13) includes a stationary stop (10,11) on one side, which is aligned with a fixed point of rotation of the angularly adjustable cutting mean (4).

6. The cutting bench (1) according to any one of the Claims 1 to 5, **characterized in that** the marking aids (25,31) are at least partially constituted of optical pointers (31).

7. The cutting bench (1) according to any one of the Claims 1 to 6, **characterized in that** the first marking aid (25) is a marking template that is inserted in the first holding means (10,11,13) having a width that matches the first profile section (24).

8. The cutting bench (1) according to any one of the Claims 1 to 7, **characterized in that**, on both sides of the second holding means (18), there are provided two first holding means (10,11,13/14,15,16) that are parallel relative to each other and adjustably aligned, respectively with alignment to one of two cutting means (4,5) that are provided opposite each other and adjustable in terms of the distance there between.

9. A method for cutting profile sections, particularly of plastic profile sections for door and window frames on a miter, wherein a firststraight profile section (24) is defined on a cutting bench (1) in a preset direction toward an angularly adjustable cutting means (4) of a first holding means (10, 11, 13) and a second profile train section (23) is defined in an angularly correct manner relative to the first cutting train (24) in the area of the cutting means (4) in the second holding means (18), **characterized in that** the first and the second profile sections (24, 34, 23) are defined in terms of their desired position, however, at a longitudinally displaced first profile section (24, 34), on the cutting bench (1), **in that** the lateral vanishing lines of the first profile train section (24) are marked on the second profile section (23), **in that** the cutting means (4) is aligned relative to a miter cut relative for the marking on the second train section (23) and actuated, and **in that** the first profile train section (24, 34) in the holding means (10, 11, 13) is longitudinally displaced to the cutting means (4) and cut at the same angular position of the cutting means (4) as the second profile train section (23).

10. The method according to Claim 9 having two parallel first holding means (10,11,13/14,15,16) that can be adjusted relative to each other in terms of the distance there between, which are aligned, respectively, relative to one of two angularly adjustable cutting means (4,5), **characterized in that** the two holding means are defined at a pre-definable width of a door or window frame, **in that** the second profile section (23) is defined at a length thereof that is defined for a door or window frame, **in that** the lateral lines of the second and at least of a first profile section are marked, and **in that** thereafter the cutting means (4) is actuated after having been angularly adjusted.

11. The method according to Claim 10for cutting profile sections for door and windows frames that are configured having a mirror-image design, **characterized in that**, the marking of the lateral lines is only done with a first profile section (24), and **in that** the angular adjustment of the second cutting means (5) is done identicallyrelative to the first angular adjustment of the first cutting means (4) in the opposite direction.

## Revendications

1. Table de coupe (1) pour des sections de profilés (23, 24, 34), notamment des sections de profilés plastiques pour des cadres de porte ou fenêtre dont les sections transversales doivent être placées précisément les unes sur les autres dans une position angulaire prescrite avec des coupes en onglet, un premier dispositif de retenue (10, 11, 13) étant prévu sur la table de coupe (1) pour une première section de profilé droite (24, 34) et au moins un second dispositif de retenue (18) étant prévu pour une seconde section de profilé (23) à fixer dans la position angulaire prescrite par rapport à la première section de profilé (24, 34) sur la table de coupe (1) et orientée sur un dispositif de coupe (4, 5) à angle réglable, **caractérisée en ce que** le premier et le second dispositif de retenue (10, 11, 13 ; 18) fixent la première section de profilé droite (24, 34) et la seconde section de profilé (23) dans leur position de consigne sur la table de coupe, la première section de profilé droite (24, 34) étant maintenue cependant de manière mobile longitudinalement, **en ce qu'**au moins une première aide au traçage (25) est prévue sur le premier dispositif de retenue (10, 11, 13) pour son tracé latéral d'alignement jusqu'à la seconde section de profilé (23) et **en ce qu'**une seconde aide au traçage (31) est reliée au dispositif de coupe (4, 5) pour le tracé de coupe.

2. Table de coupe (1) selon la revendication 1, **caractérisée en ce que** le second dispositif de retenue (18) est orienté de manière réglable parallèlement à l'orientation du premier dispositif de retenue (10, 11, 13).

3. Table de coupe selon la revendication 2, **caractérisée en ce que** le second dispositif de retenue (18) est orienté transversalement à l'orientation du premier dispositif de retenue.

4. Table de coupe selon la revendication 1, 2 ou 3, **caractérisée en ce que** le second dispositif de retenue (18) et le premier dispositif de retenue (10, 11, 13) sont réalisés de manière réglable (rails 8, 9) dans leur écartement transversalement à l'orientation du premier dispositif de retenue (10, 11, 12).

5. Table de coupe selon l'une quelconque des revendications 1 à 4, **caractérisée en ce que** le premier dispositif de retenue (10, 11, 13) présente d'un côté une butée fixe (10, 11) qui est orientée sur un point de rotation fixe du dispositif de coupe à angle réglable (4).

6. Table de coupe selon l'une quelconque des revendications 1 à 5, **caractérisée en ce que** les aides au traçage (25, 31) sont formées au moins en partie par un indicateur lumineux (31).

7. Table de coupe selon l'une quelconque des revendications 1 à 6, **caractérisée en ce que** la première aide au traçage (25) consiste en un gabarit de traçage à insérer dans le premier dispositif de retenue (10, 11, 13), dont la largeur coïncide avec la première section de profilé (24).

8. Table de coupe selon l'une quelconque des revendications 1 à 7, **caractérisée en ce que** deux premiers dispositifs de retenue (10, 11, 13/14, 15, 16) parallèles orientés sur respectivement l'un des deux dispositifs de coupe (4, 5) sont prévus de part et d'autre du second dispositif de retenue (18), dont l'écartement l'un par rapport à l'autre peut être réglé.

9. Procédé de coupe de sections de profilés, en particulier de sections de profilés plastiques pour des cadres de porte ou fenêtre en onglet, une première section de profilé droite (24) étant fixée sur une table de coupe (1) dans un sens prescrit, s'étendant vers un dispositif de coupe (4) à angle réglable dans un premier dispositif de retenue (10, 11, 13) et une seconde section de profilé (23) étant fixée en respectant les angles de la première section de profilé (24) dans la zone du dispositif de coupe (4) dans un second dispositif de retenue (18), **caractérisé en ce que** la première et la seconde sections de profilés (24, 34 ; 23) sont fixées dans leur position de consigne mais pour la première section de profilé (24, 34) mobile longitudinalement, sur la table de coupe (1), **en ce que** les lignes d'alignement latérales de la première section de profilé (24) sont tracées sur la seconde section de profilé (23), **en ce que** le dispositif de coupe (4) est orienté et actionné pour une coupe en onglet sur le tracé sur la seconde section de profilé (23) et **en ce que** la première section de profilé (24, 34) est déplacée longitudinalement dans le dispositif de retenue (10, 11, 13) jusqu'au dispositif de coupe (4) et est coupée avec la même position angulaire du dispositif de coupe (4) que la seconde section de profilé (23).

10. Procédé selon la revendication 9 avec deux premiers dispositifs de retenue (10, 11, 13/14, 15, 16) réalisés parallèlement à distance modifiable l'un par rapport à l'autre qui sont orientés respectivement sur l'un des deux dispositifs de coupe (4, 5) à angle réglable, **caractérisé en ce que** les deux dispositifs de retenue (10, 11, 13/14, 15, 16) sont réglés dans leur écartement l'un par rapport à l'autre sur une largeur prescrite d'un cadre de porte ou de fenêtre, **en ce que** la seconde section de profilé (23) est fixée dans sa position prescrite pour un cadre de porte ou de fenêtre afin que les lignes latérales de la seconde et au moins d'une première section de profilé soient tracées et que le dispositif de coupe (4) soit ensuite réglé en angle et actionné.

11. Procédé selon la revendication 10 pour couper des sections de profilés pour des cadres de porte ou de fenêtre réalisés de manière symétrique, **caractérisé en ce que** le traçage des lignes latérales n'est réalisé qu'avec une première section de profilé (24) et **en ce que** le réglage angulaire du second dispositif de coupe (5) est entrepris en sens inverse de manière identique au réglage angulaire du premier dispositif de coupe (4).
